# EUROPEAN PATENT APPLICATION

(11) **EP 1 265 171 A2**
(43) Date of publication of application: **11.12.2002**
(21) Application number: 02006544.7
(22) Date of filing: 20.03.2002
(51) Int. Cl.: G06F 17/60

(54) **Method and system for trading products over a data communications network, particularly the internet**

(30) Priority: 29.03.2001 IT MI010669
(71) Applicant: Yescode s.r.l., 40128 Bologna (IT)
(72) Inventor: Mazza, Massimo, 40126 Bologna (IT); Mazza, Rutilio, 06038 Spello (Prov. of Perugia) (IT)
(74) Representative: Modiano, Guido, Dr.-Ing.

(57) **Abstract**

A method for trading products over a data communications network, particularly the Internet, comprising the steps that consist of:
-- the generation, on the part of an operator (10), of a plurality of codes related to a product offered by a supplier (20) of goods or services;
-- the connection of a user (30) to an online site (50) provided by the operator;
-- the entry, on the part of the user, of one or more of the codes;
-- the identification, on the part of the operator, of the product associated with the one or more entered codes;
-- the generation, on the part of the operator, of electronic pages based on the one or more entered codes, the electronic pages comprising a description of the associated product.

## Description

The present invention relates to the field of supplying services oriented to e-commerce, with reference to methods and systems for trading products over data communications networks, particularly the Internet.

It has been found that technological development in recent years and the diffusion of low-cost data communications tools have had a great impact on commercial methods, even as regards ordinary trading operations.

As a natural consequence of the worldwide diffusion of data communications networks, with particular reference to the Internet, sellers and manufacturers have become able to reach directly a constantly growing population of potential customers, with the possibility to revolutionize the behaviors that up to now had been conventional in the purchase/sale relationship between the customer and the seller in the activities linked to this relationship.

Many of the operations and activities performed with conventional methods have been in fact transposed to a data communications equivalent: navigation on the Internet, the quintessential data communications network, allows the user to search for products he is interested in and, by way of the onset of e-commerce, to make purchases directly from his own home.

However, despite the enormous potential of the electronic market, the possibilities that are offered are certainly still not utilized adequately, since on the one hand sellers and manufacturers are unable, or unwilling, to shoulder the risks and efforts required for direct management of e-commerce, and on the other hand users are faced with a simple data-communications translation of conventional shop windows, without the possibility to interact and customize in a satisfactory manner the offers that arrive from suppliers.

The aim of the present invention is to solve the above noted problems by introducing a method and a system that allow users to easily reach, view (even interactively) and optionally subscribe to a service, or purchase a product, over data communications networks, particularly the Internet.

Within this aim, an object of the present invention is to minimize the technical effort that the supplier of goods or services is required to make, relieving said supplier of the problems of IT management and of putting the information online.

Another object of the present invention is to generate an infrastructure that is as much as possible automated and capable of handling transparently any type of product or service, regardless of its nature and of the parties involved in offering and purchasing the goods.

This aim and these and other objects that will become better apparent hereinafter are achieved by a method for trading products over a data communications network, particularly the Internet, which comprises the steps that consist of: the generation, on the part of an operator, of a plurality of codes related to a product offered by a supplier of goods or services; the connection of a user to an online site provided by the operator; the entry, on the part of the user, of one or more of the generated codes; the identification, on the part of the operator, of the product associated with the entered codes and the automatic generation of electronic pages comprising a description of the associated product.

Advantageously, the generated electronic pages are created by reading or assembling information contained in an electronic archive (database).

Conveniently, the operator verifies that the codes entered by the user exist and are enabled, identifies the parties involved in the distribution of the product, and provides a data entry mask by means of which the user can enter or modify parameters related to the product; on the basis of said parameters, an offer to purchase the product or to subscribe to the service is generated and the user can accept such offer directly by means of the online connection established with the site of the operator.

Further characteristics and advantages of the present invention will become better apparent from the following detailed description, given by way of non-limitative example and illustrated in the accompanying drawings, wherein:
Figure 1 is a block diagram of the functional and informational flow of a preferred embodiment of the system according to the invention;
Figure 2 is a view of a first example of graphical interface generated by the system according to the present invention, regarding a first step of the method;
Figure 3 is a view of an example of graphical interface generated by the system according to the present invention, regarding a subsequent step of the method.

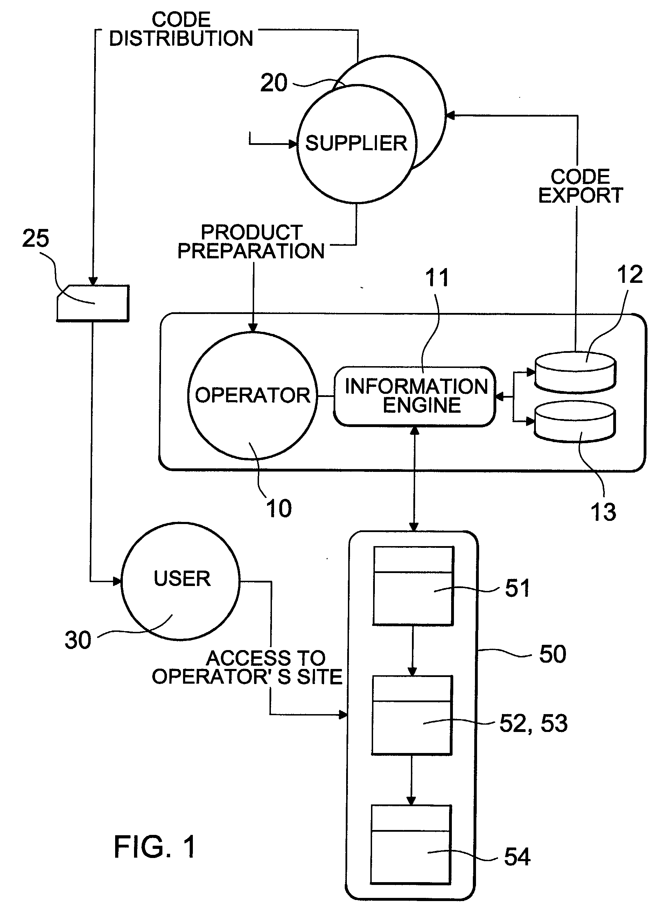

With reference now to Figure 1, a supplier of goods, services or products in general, hereinafter referenced simply as supplier 20, prepares an offer for a given product.

Data related to the product and to the prepared offer are supplied, directly by electronic means or alternatively by manual means, to an operator 10, who by virtue of appropriate technical means, substantially constituted by a software application 11 referenced hereinafter as "information engine", enters in an electronic archive 12 (database) the data required to identify the product, any additional parties involved in the management of the product and of the corresponding offers, and also processes codes associated with said product, as will become better apparent hereinafter, said codes also being stored in the electronic archive 12.

Furthermore, the codes thus generated are sent electronically or manually to the supplier 20, who distributes them on the market.

This distribution can occur in the most disparate manners, for example by means of paper publications (newspapers, magazines, handbills, adverts, brochures, et cetera) 25 or by means of online methods, for example by means of a so-called "traced link" or a reference to a different Internet address.

Codes related to the offered product are thus acquired by users 30 of data communications networks, substantially users of the Internet.

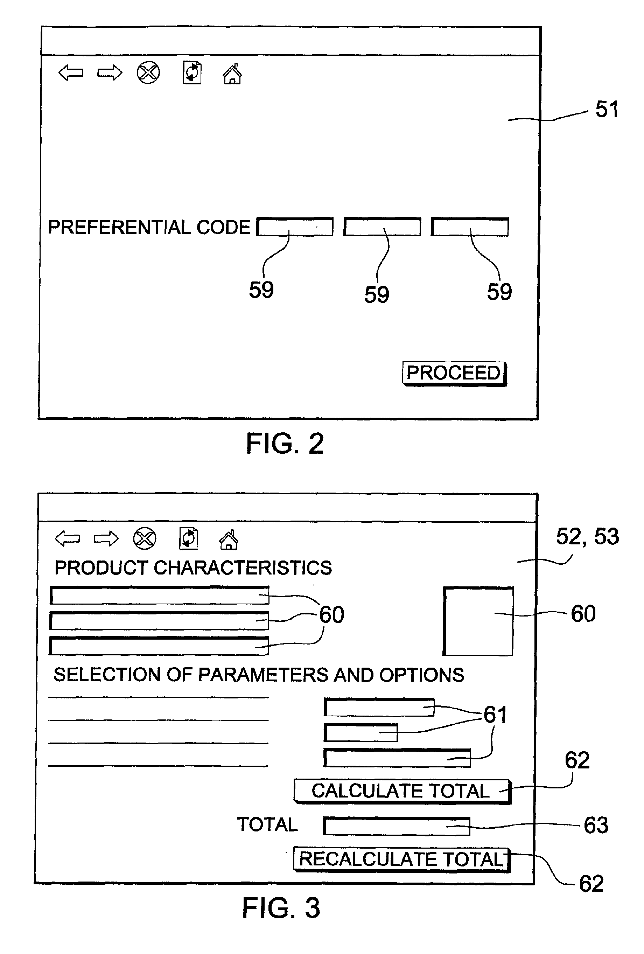

A user 30 who possesses codes related to a product thus connects to an online site 50 provided by the operator and enters one or more codes he possesses in an appropriately provided mask managed by appropriate technical means and shown in greater detail in Figure 2.

The technical means required to enter such codes are substantially constituted by a dynamic Web page 51, written with any programming language suitable for the purpose and displayable within an ordinary Internet navigation program, such as Microsoft Internet Explorer™ or Netscape Navigator™, which is entrusted with managing a series of variables, associating them with the data entered by the user or generating their values automatically, according to appropriate algorithms.

In a preferred embodiment, the codes are entered in a mask 59 comprised within the generated Web page 51 and are assembled into a string of characters formed by a combination of fields shown in Table 1.

**Table 1**

| | |
|---|---|
| CA1_ | Code identifier |
| CA1_lt | Code identifier in "traced-link" format |
| In_ | Criterion for forming the organized information |
| Di_ | Set of parties involved, associated in real time according to the code |
| +U_ | Data for interaction with the user |
| C_ | Data defining the economic commitments and consequences for the involved parties |

The string thus combined is provided to the information engine 11, which is running at the operator's premises and verifies both the existence and enabling of the entered codes, comparing the received data with the contents of the archive 12. In case of failure, the system 11 displays an error screen and asks the user to reenter the codes he is interested in. Otherwise, if the verification of existence and enabling of the codes is successful, the system identifies the product linked to the entered codes, identifies the parties involved according to the data supplied earlier by the product supplier, and prepares a data entry mark for the user according to the product and according to the identified parties, generating a dynamic page 52, which is shown schematically in Figure 3 and is created by assembling information 60 related to the product and to the parties, said information being preferably stored in the archive 12 of said operator.

The user 30 can now select or modify the parameters 61 of the product that are made available to him. Once he has completed his choices, the user confirms on the screen his choices by acting on appropriate graphical buttons 62, thus sending additional data to the information engine 11. The information engine 11 temporarily stores the received data in a temporary archive 13 and processes an offer 63 on the basis of the received parameters, the selected product and any agreements with the involved parties. The offer is then displayed on the monitor to the user in a screen 53, and the user can thus evaluate its convenience.

If the user 30 does not deem the offer to be satisfactory, he can repeat the above described process, modifying some parameters and thus requesting a new offer.

When the user is satisfied with his choices, he sends his acceptance to the information engine 11 by acting on appropriate graphical buttons available in the generated Web page. The information engine 11 automatically generates a new Web page 54, which is again created starting from elements available to the engine in electronic archives and is conditioned by the data entered by the user; the new Web page comprises an additional data entry mask in which the user enters the data required to formalize the purchase, indicating a preferred payment method.

The payment method is based essentially on known transaction mechanisms, for example by means of a credit card, by using procedures that are known in the field of e-commerce.

Finally, if the transaction procedure is successful, a confirmation is sent to the user 30 and the system 11 transmits to the involved parties 20 the information required to perform the steps for delivering the purchased product or for activating the offered service.

Merely by way of non-limitative example, an example of use of the present invention, useful for better understanding the operation of the claimed method and system, is given hereinafter.

Given the parties "Insurance company", "Insurance brokers", "Insurance agreement contractor", "Distribution collaborators", an insurance package suitable to cover tourists, which can be defined and supplemented by the tourist or user himself, is organized.

The four parties identified above are generally grouped, from a representational standpoint, under the expression "service supplier" 20.

The service supplier 20 provides the operator 10 with information regarding the service and with a criterion for calculating the insurance premiums as a function of the agreement contract among the parties; said operator 10 stores the received information in his archive 12.

The operator also generates and stores in the archive 12 one or more alphanumeric codes related to the contract and sends them to the supplier 20, who deals with distributing them on the market by virtue of physical media 25 or online media, as already described.

Once the user-tourist 30 interested in the package has acquired the necessary codes, he connects to the site 50 managed by the operator 10 and enters the codes he possesses; by virtue of such codes, the information engine 11 is capable of automatically generating a Web page 52 related to the offered service and of displaying the specific agreement determined by the entered codes.

The user 30 can then select any customization options made available and subscribe to the offer, in which case the information engine 11 shows the user, in a screen 53, the results of the customization that has been performed and, following the confirmation of purchase on the part of the user, stores the reference data of the operation in an electronic archive and sends them to the service supplier 20 or in any case makes them available over a data communications network to the supplier, who completes the transaction by activating the required insurance cover.

It has thus been shown that the present method and system achieve the intended aim and objects. Clearly, numerous modifications are evident and can be promptly made by the person skilled in the art without abandoning the scope of the protection of the present invention. Therefore, the protective scope of the claims must not be limited by the illustrations or by the preferred embodiments given in the description as examples, but rather the claims must comprise all the patentable novelty characteristics that can be deduced from the present invention, including all the characteristics that would be treated as equivalent by the person skilled in the art.

For example, it is evident that the method for managing the codes and transferring them to the information system of the operator can be performed by using different variables or methods with respect to those used, which are given merely by way of example.

It is equally evident that the use of the system can be extended beyond the Internet, since it is clearly possible to transpose part of the steps of the method onto any other data communications network, even wirelessly, for example by using WAP systems or mobile telephony systems in general, and likewise part of the described method and system can be integrated in a fully equivalent manner, without abandoning the scope of the protection of the invention, by using alternative data communications networks where appropriate. For example, it is obvious for the person skilled in the art to replace or complement the procedure for notifying that the transaction has occurred with a report to the supplier via SMS messages rather than e-mail messages.

The disclosures in Italian Patent Application No. MI2001A000669 from which this application claims priority are incorporated herein by reference.

## Claims

1. A method for trading products over a data communications network, particularly the Internet, **characterized in that** it comprises the steps that consist of:
-- the generation, on the part of an operator, of a plurality of codes related to a product offered by a supplier of goods or services;
-- the connection of a user to an online site provided by said operator;
-- the entry, on the part of said user, of one or more of said codes;
-- the identification, on the part of said operator, of said product associated with said one or more entered codes;
-- the generation, on the part of said operator, of electronic pages based on said one or more entered codes, said electronic pages comprising a description of said associated product.

2. The method for trading products over a data communications network according to claim 1, **characterized in that** said electronic pages are generated by reading or assembling information contained in an electronic archive.

3. The method for trading products over a data communications network according to claim 1, **characterized in that** said step of identifying, on the part of said operator, said product associated with said one or more entered codes comprises:
-- verifying the existence and enabling of said entered code;
-- identifying the parties involved in the distribution of said product.

4. The method for trading products over a data communications network according to claim 1, **characterized in that** said step of generating electronic pages on the part of said operator comprises:
-- generating a data entry mask as a function of said associated product and said involved parties.

5. The method for trading products over a data communications network according to claim 4, further comprising the step of:
-- preparing a sale offer based on values and parameters entered by said user in said data entry mask.

6. The method for trading products over a data communications network according to claim 5, further comprising the step of:
-- activating automated payment procedures if the user chooses to purchase the offered product.

7. A system for trading products over a data communications network, particularly the Internet, **characterized in that** it comprises:
-- means for generating, on the part of an operator, a plurality of codes related to a product offered by a supplier of goods or services;
-- an online site provided by said operator;
-- means for the entry, on the part of a user, of one or more of said codes in said site;
-- means for the identification, on the part of said operator, of said product associated with said one or more entered codes;
-- means for the generation, on the part of said operator, of electronic pages based on said one or more entered codes, said electronic pages comprising a description of said associated product.

8. The system for trading products over a data communications network according to claim 7, **characterized in that** said means for generating electronic pages comprise means for reading or assembling information contained in an electronic archive.

9. The system for trading products over a data communications network according to claim 8, further comprising:
-- means for verifying the existence and enabling of said entered code;
-- means for identifying the parties involved in the distribution of said product.

10. The system for trading products over a data communications network according to claim 9, further comprising:
-- means for generating a data entry mask as a function of said associated product and of said involved parties.

11. The system for trading products over a data communications network according to claim 10, further comprising:
-- means for processing a sales offer according to values and parameters entered by said user in said data entry mask.

12. The system for trading products over a data communications network according to claim 11, further comprising:
-- means for activating automated payment procedures if the user chooses to purchase the offered product.
